# EUROPÄISCHE PATENTSCHRIFT

(11) **EP 2 048 416 B1**
(45) Veröffentlichungstag und Bekanntmachung des Hinweises auf die Patenterteilung: **08.03.2017**
(21) Anmeldenummer: 08017288.5
(22) Anmeldetag: 01.10.2008
(51) Int. Cl.: F16K 3/24, F02B 29/04, F28F 27/02, F02M 26/26, F02M 26/28

(54) **Ventilvorrichtung zur Regelung eines rückgeführten gasförmigen Fluids und Wärmetauscher**
Valve device for regulating a recycled gaseous liquid and heat exchanger
Dispositif à soupape destiné au réglage d'un fluide récupéré sous forme de gaz et échangeur thermique

(30) Priorität: 08.10.2007 DE 102007048297
(43) Veröffentlichungstag der Anmeldung: 15.04.2009
(73) Patentinhaber: MAHLE Behr GmbH & Co. KG, 70469 Stuttgart (DE)
(72) Erfinder: Barwig, Jürgen, 71665 Vaihingen/Enz (DE); Fetzer, Tobias, 73760 Ostfildern (DE); Maucher, Ulrich, 70825 Korntal-Münchingen (DE); Ablitzer, Frédéric, 90300 Valdoie (FR); Ruckwied, Jens, 70178 Stuttgart (DE)
(74) Vertreter: Grauel, Andreas

(56) Entgegenhaltungen:
- WO-A1-2005/113972
- DE-A1- 10 355 649

## Beschreibung

Die vorliegende Erfindung betrifft eine Ventilvorrichtung zur Regelung eines rückgeführten gasförmigen Fluids und/oder zur Wärmetauscher-/Bypassregelung für einen Wärmetauscher eines Verbrennungsmotors eines Kraftfahrzeugs, wie sie gemäss den oberbegrifflichen Merkmalen von Anspruch 1 beispielsweise aus Dokument WO-A-2005/113972 bekannt ist.

Weiterhin betrifft die vorliegende Erfindung einen Wärmetauscher, insbesondere Abgaskühler und/oder Ladeluftkühler, mit ersten Strömungskanälen zur Führung des gasförmigen Fluids und zweiten Strömungskanälen zur Führung eines zweiten Fluids zur Kühlung des gasförmigen Fluids, zumindest ein Wärmetauschergehäuse zur Aufnahme der ersten Strömungskanäle und der zweiten Strömungskanäle.

Aus der DE 10 2006 033 585 A1 ist ein Wärmeübertragerventil bekannt. Hierbei weist die Wärmeübertragerventileinrichtung ein Gehäuse und einen Ventilschieber auf. Ferner ist ein Schließkörper aus einem Metall und/oder aus einem Sintermaterial wie beispielsweise Keramik oder Magnesium oder aus Aluminium oder Stahl, wie beispielsweise Edelstahl vorgesehen. Um das Ventil dicht auszuführen, müssen die Bereiche des Ventilschiebers und die entsprechenden Gegenflächen des Gehäuses, in denen der Ventilschieber gleitet, sehr genau bearbeitet werden, so dass möglichst wenig Gas, insbesondere Abgas oder Ladeluft, durch den verbleibenden Schlitz zwischen Gehäuse und Ventilschieber hindurchströmen kann. Darüber hinaus kann es aufgrund der engen Passung zwischen Ventilschieber und Gehäuse zum Verkanten bzw. Verklemmen des Ventilschiebers kommen.

Es ist insbesondere Aufgabe der vorliegenden Erfindung, eine Ventilvorrichtung der eingangs beschriebenen Art zu verbessern, insbesondere die Dichtheit der Ventilvorrichtung zu verbessern, die Gefahr des Verkantens bzw. Verklemmens des Ventilkörpers in dem Ventilgehäuse zu vermeiden und Druckverluste beim Durchströmen des gasförmigen Fluids durch die Austrittsöffnung bzw. Eintrittsöffnung vorteilhaft zu verringern, ohne dabei die Durchflussmenge reduzieren zu müsse.

Die Aufgabe wird durch die Merkmale des Anspruchs 1 gelöst.

In einer vorteilhaften Weiterbildung ist vorgesehen, dass das erste Ventilkörperteilelement die Durchflussmenge der ersten Austrittsöffnung und/oder der zweiten Austrittsöffnung regelt. Auf diese Weise kann besonders vorteilhaft die Durchflussmenge für zwei Austrittsöffnungen durch ein Ventilkörperteilelement geregelt werden.

In einer vorteilhaften Weiterbildung der Erfindung sind das erste Ventilkörperteilelement und das zweite Ventilkörperteilelement einteilig ausgebildet. Auf diese Weise können zusätzliche Montage- bzw. Fügevorrichtungen besonders vorteilhaft eingespart werden.

In einer vorteilhaften Weiterbildung der Erfindung ist das erste Ventilkörperteilelement zumindest bereichsweise zylinderförmig ausgebildet. Zumindest eine erste Querschnittsfläche weist einen ersten Durchmesser auf. Auf diese Weise besitzt das erste Ventilkörperteilelement eine besonders vorteilhaft herstellbare Oberfläche zur Anlage an dem Ventilgehäuse.

In einer weiteren vorteilhaften Werterbildung der Erfindung ist das zweite Ventilkörperteilelement kegelstumpfartig, insbesondere tellerförmig ausgebildet. Auf diese Weise ist die Eintrittsöffnung der Ventilvorrichtung besonders vorteilhaft dicht verschließbar, so dass kein gasförmiges Fluid über die Eintrittsöffnung in das Ventilgehäuse eintreten kann.

In einer vorteilhaften Weiterbildung der Erfindung weist das zweite Ventilkörperteilelement zumindest eine zweite Querschnittsfläche mit einem zweiten Durchmesser auf Auf diese Weise ist die Eintrittsöffnung der Ventilvorrichtung besonders vorteilhaft mit dem zweiten Ventilkörperteilelement verschließbar.

In einer vorteilhaften Weiterbildung der Erfindung ist der zumindest eine erste Durchmesser größer als der zumindest eine zweite Durchmesser. Auf diese Weise kann der Durchmesser des ersten Ventilkörperteilelements besonders vorteilhaft größer ausgebildet werden als das zweite Ventilkörperteilelement. Besonders vorteilhaft lassen sich dadurch Druckverluste beim Überströmen von der Eintrittsöffnung zu der zumindest einen, insbesondere den zwei Austrittsöffnungen vermeiden.

In einer besonders vorteilhaften Weiterbildung ist ein Durchmesserverhältnis des ersten Durchmessers zu dem zweiten Durchmesser 3:1, insbesondere 2:1, insbesondere 1,5:1.

In einer besonders vorteilhaften Weiterbildung der Erfindung weist der erste Ventilkörper zumindest eine Durchgangsöffnung zur Durchströmung mit dem gasförmigen Fluid auf. Auf diese Weise kann besonders vorteilhaft eine Funktionstrennung mit zum einen einer besonders dichten Abdichtung der Eintrittsöffnung und zum anderen ein sicherer Betrieb der Ventilvorrichtung ohne Verklemmen und Verkanten gewährleistet werden.

In einer vorteilhaften Weiterbildung der Erfindung ist die zumindest eine Durchgangsöffnung zumindest abschnittsweise zylindersegmentartig ausgebildet. Auf diese Weise kann das erste Ventilkörperteilelement besonders leicht und trotzdem stabil ausgebildet werden, indem insbesondere benachbarte Durchgangsöffnungen durch einen Trennsteg abgetrennt sind.

In einer vorteilhaften Weiterbildung der Erfindung ist die zumindest eine Eintrittsöffnung kegelförmig ausgebildet und/oder als zweite Ventilsitzfläche zur Anlage des zweiten Ventilkörperteilelements ausgebildet. Auf diese Weise kann die Eintrittsöffnung besonders vorteilhaft mit dem zweiten Ventilkörperteilelement abgedichtet werden.

In einer besonders vorteilhaften Weiterbildung der Erfindung ist das Ventilgehäuse käfigartig ausgebildet. Auf diese Weise kann Material besonders vorteilhaft eingespart und das Gewicht reduziert werden und dennoch die Funktionsfähigkeit des Ventilgehäuses gewährleistet werden.

In einer besonders vorteilhaften Weiterbildung der Erfindung weist das Ventilgehäuse einen zylinderartig ausgebildeten Hohlraum auf mit einer Ventilgehäuseinnenquerschnittsfläche, die im Wesentlichen den ersten Durchmesser aufweist. Auf diese Weise kann das erste Ventilkörperteilelement besonders vorteilhaft durch den zylinderartig ausgebildeten Hohlraum aufgenommen werden und auf diese Weise das erste Ventilkörperteilelement besonders vorteilhaft führen.

In einer besonders vorteilhaften Weiterbildung der Erfindung ist das erste Ventilkörperteilelement in dem Hohlraum des Ventilgehäuses axial verschiebbar angeordnet. Auf diese Weise können die beiden Austrittsöffnungen und die Eintrittsöffnung entsprechend der jeweiligen Anforderungen geöffnet oder geschlossen werden.

Ferner ist erfindungsgemäß ein Wärmetauscher, insbesondere ein Abgaskühler und/oder ein Ladeluftkühler, vorgesehen, der erste Strömungskanäle zur Führung des gasförmigen Fluids und zweite Strömungskanäle zur Führung eines zweiten Fluids zur Kühlung des gasförmigen Fluids aufweist. Ferner weist der Wärmetauscher zumindest ein Wärmetauschergehäuse zur Aufnahme der ersten Strömungskanäle und der zweiten Strömungskanäle auf. Zumindest eine Ventilvorrichtung nach einem der Ansprüche 1 bis 10 ist in dem Wärmetauscher angeordnet. Somit kann der Wärmetauscher entsprechend der jeweiligen Anforderung mit gasförmigem Fluid versorgt oder das gasförmige Fluid um den Wärmetauscher herumgeleitet werden.

In einer vorteilhaften Weiterbildung der Erfindung ist die Ventilvorrichtung kartuschenartig in den Wärmetauscher einbaubar bzw. ist kartuschenartig in den Wärmetauscher eingebaut bzw. kann kartuschenartig in den Wärmetauscher eingebaut werden. Auf diese Weise ist die Ventilvorrichtung besonders einfach in den Wärmetauscher einsetzbar bzw. montierbar.

In einer vorteilhaften Weiterbildung der Erfindung sind das Ventilgehäuse und das Wärmetauschergehäuse zumindest abschnittsweise mittels zumindest einer Dichtung gegeneinander abgedichtet. Auf diese Weise wird besonders vorteilhaft verhindert, dass gasförmiges Medium und/oder Kühlmedium ungewünscht austreten können.

In einer besonders vorteilhaften Weiterbildung sind das Ventilgehäuse und das Wärmetauschergehäuse einteilig ausgebildet. Auf diese Weise können besonders vorteilhaft zusätzliche Montageschritte zur Montage des Ventilgehäuses in dem Wärmetauschergehäuse eingespart werden.

Weitere vorteilhafte Ausgestaltungen der Erfindung ergeben sich aus den Unteransprüchen und aus der Zeichnung. Die Gegenstände der Unteransprüche beziehen sich sowohl auf die erfindungsgemäße Ventilvorrichtung als auch auf den erfindungsgemäßen Wärmetauscher.

Ausführungsbeispiele der Erfindung sind in der Zeichnung dargestellt und werden im Folgenden näher erläutert, wobei eine Beschränkung der Erfindung hierdurch nicht erfolgen soll. Es zeigen
- Figur 1:: eine Schnittdarstellung der Ventileinrichtung;
- Figur 2a:: eine erste isometrische Darstellung des Ventilgehäuses;
- Figur 2b:: eine zweite isometrische Darstellung des Ventilgehäuses;
- Figur 2c:: eine Schnittdarstellung des Ventilgehäuses;
- Figur 3a:: eine erste isometrische Darstellung des ersten Ventilkörperteilelements;
- Figur 3b:: eine zweite isometrische Darstellung des ersten Ventilkörperteilelements;
- Figur 3c:: eine Vorderansicht des ersten Ventilkörperteilelements;
- Figur 3d:: eine Schnittdarstellung des ersten Ventilkörperteilelements;
- Figur 4:: ein Regeldiagramm der Ventileinrichtung, wobei der Massenstrom über dem Hub aufgetragen ist;
- Figur 5a:: eine erste Stellung der Ventileinrichtung;
- Figur 5b:: eine zweite Stellung der Ventileinrichtung;
- Figur 5c:: eine dritte Stellung der Ventileinrichtung;
- Figur 5d:: eine vierte Stellung der Ventileinrichtung;
- Figur 6a:: eine erste isometrische Darstellung des Wärmetauschers mit der Ventileinrichtung;
- Figur 6b:: eine Schnittdarstellung des Wärmetauschers mit der Ventileinrichtung;
- Figur 6c:: eine zweite isometrische Darstellung des Wärmetauschers mit der Ventileinrichtung.

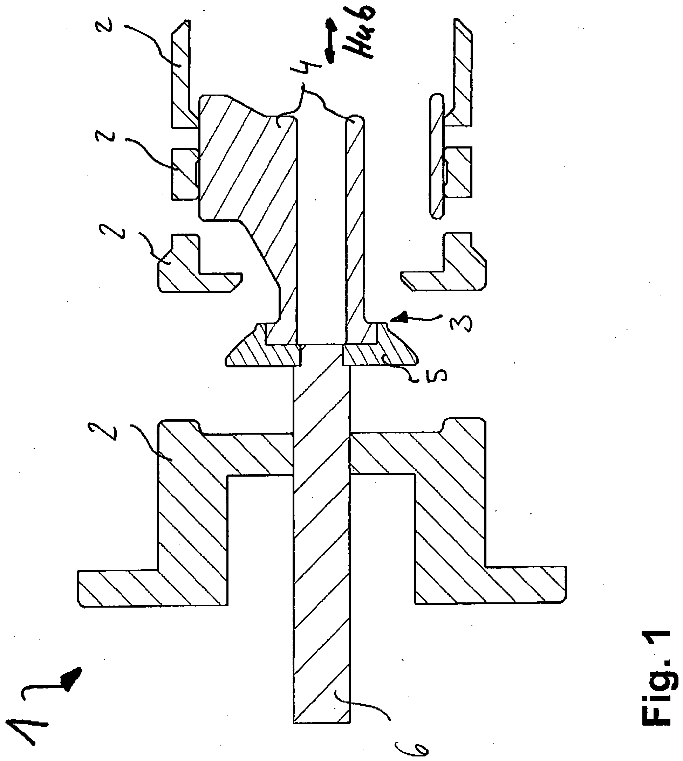

**Figur 1** zeigt eine Schnittdarstellung der Ventileinrichtung 1.

Die Ventilvorrichtung 1 weist ein Ventilgehäuse 2 und einen Ventilkörper 3 auf. Der Ventilkörper 3 weist ein erstes Ventilkörperteilelement 4 und ein zweites Ventilkörperelement 5 auf. Eine Stange 6 ist in eine nicht näher bezeichnete Bohrung des zweiten Ventilkörperelements 5 eingesteckt und mit diesem verbunden, beispielsweise über Formschluss wie ein Gewinde oder über Reibschluss wie beispielsweise einen Presssitz. Das zweite Ventilkörperteilelement 5 ist kegelstumpfartig, insbesondere als Tellerelement ausgebildet. Das tellerartige zweite Ventilkörperteilelement 5 weist eine im Wesentlichen zylinderförmige Aussparung auf. Das erste Ventilkörperteilelement 4 weist einen nicht näher bezeichneten Bund auf, der als entsprechendes Gegenstück zu der Aussparung in dem zweiten Ventilkörperteilelement 5 ausgebildet ist. Auf diese Weise können das zweite Ventilkörperteilelement 5 und das erste Ventilkörperteilelement 4 mittels Formschluss, beispielsweise durch ein Gewinde und/oder mittels Reibschluss, wie beispielsweise durch eine Presspassung miteinander verbunden werden. Im dargestellten Ausführungsbeispiel ist der nicht näher bezeichnete Bund des ersten Ventilkörperteilelements 4 benachbart zu der Stange 6 angeordnet.

Die einzelnen Details des Ventilgehäuses 2 und des Ventilkörpers 3 sowie des ersten Ventilkörperteilelements 4 und des zweiten Ventilkörperteilelements 5 werden in den folgenden Figuren ausführlicher beschrieben.

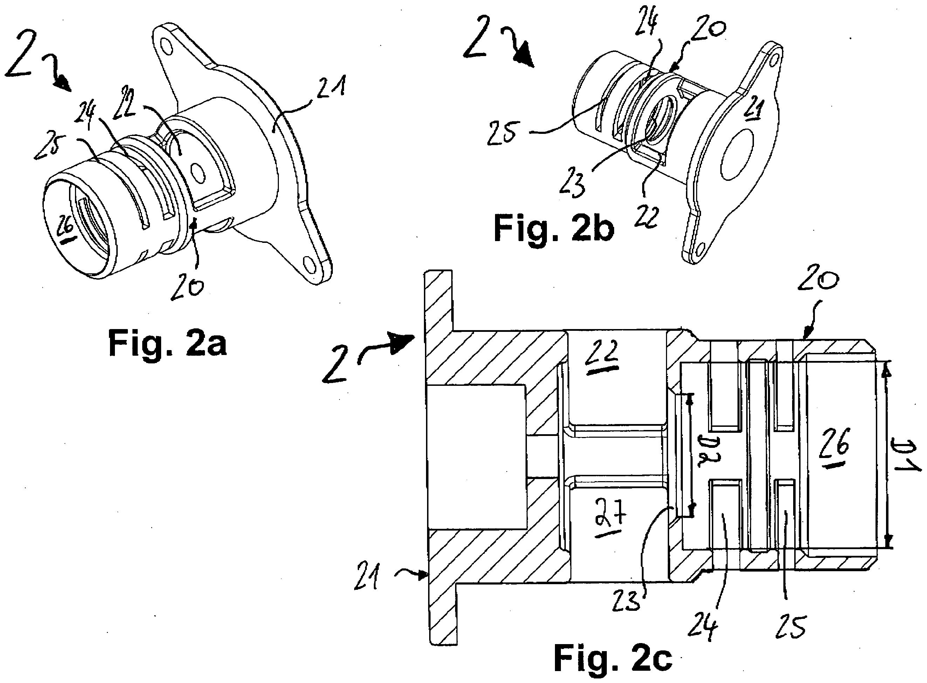

**Figur 2a** zeigt eine erste isometrische Darstellung des Ventilgehäuses 2.

**Figur 2b** zeigt eine zweite isometrische Darstellung des Ventilgehäuses 2 und **Figur 2c** zeigt eine Schnittdarstellung des Ventilgehäuses 2. Gleiche Merkmale sind mit den gleichen Bezugszeichen versehen wie in Figur 1.

Das Ventilgehäuse 2 weist ein erstes Gehäuseelement 20 und ein zweites Gehäuseelement 21 auf. Das erste Gehäuseelement 20 und das zweite Gehäuseelement 21 können miteinander verbunden oder einteilig ausgeführt sein. Das Ventilgehäuse 2 kann aus Stahl wie beispielsweise Edelstahl oder aus Aluminium oder aus einem anderen metallischen Material ausgebildet sein. Ferner kann das Ventilgehäuse 2 aus Keramik ausgebildet sein. Darüber hinaus kann das Ventilgehäuse 2 auch aus einem Faserverbundwerkstoff ausgebildet sein. Das Ventilgehäuse 2 kann auch aus einem hochtemperaturbeständigen Kunststoff ausgebildet sein.

Das zweite Gehäuseelement 21 ist als Flansch ausgebildet. Der Flansch ist im Wesentlichen als Ringelement mit einer zentralen Bohrung ausgebildet. Aus dem Ringelement erstrecken sich im dargestellten Ausführungsbeispiel zwei Zungenelemente. Jedes Zungenelement weist eine Bohrung auf, die beispielsweise ein Gewinde aufweisen kann. Die Bohrung kann beispielsweise Befestigungselemente wie Schrauben aufnehmen. In einem anderen Ausführungsbeispiel ist nur ein derartiges Zungenelement oder sind mehr als zwei Zungenelemente vorgesehen.

Das erste Gehäuseelement ist als zylinderartiger Körper ausgebildet. Der zylinderartige Körper ist als Hohlkörper ausgebildet und weist zumindest einen Hohlraum 26 auf. Das erste Gehäuseelement 20 weist einen oder mehrere Zylinderabschnitte auf. Im dargestellten Ausführungsbeispiel weist das erste Gehäuseelement 20 einen ersten nicht näher bezeichneten Zylinderabschnitt und einen weiteren zweiten nicht näher bezeichneten Zylinderabschnitt auf. Im Bereich des zweiten, nicht näher bezeichneten Zylinderabschnitts, der einen größeren Außendurchmesser aufweist, ist zumindest eine erste Eintrittsöffnung 22 vorgesehen. Die erste Eintrittsöffnung 22 ist insbesondere schlitzartig ausgebildet. Auf diese Weise kann gasförmiges Fluid wie beispielsweise Abgas und/oder Ladeluft in das zweite Gehäuseelement 21 einströmen. Im dargestellten Ausführungsbeispiel weist das Gehäuse 2 zwei erste Eintrittsöffnungen 22 auf, die im Wesentlichen einander gegenüberliegend angeordnet sind. Die zwei ersten Eintrittsöffnungen 22 sind durch zwei nicht näher bezeichnete Stege voneinander getrennt. In einem anderen nicht dargestellten Ausführungsbeispiel können am Umfang des größeren Zylinderabschnitts des ersten Gehäuseelements nur eine oder mehr als zwei erste Eintrittsöffnungen 22 vorgesehen sein.

Im Wesentlichen zentrisch in dem Ventilgehäuse 2 ist eine erste, nicht näher bezeichnete Bohrung zur Durchführung der Stange 6 angeordnet. Ferner ist zentrisch eine zweite Eintrittsöffnung 23 angeordnet. Die zweite Eintrittsöffnung 23 ist zumindest abschnittsweise kegelartig, beispielsweise als Senkung, und einem weiteren Abschnitt zylinderförmig ausgebildet. Die zweite Eintrittsöffnung 23 kann auch vollständig als kegelförmige Bohrung oder vollständig als zylinderförmige Bohrung ausgebildet sein. Die zweite Eintrittsöffnung 23 dient der Aufnahme des zweiten Ventilkörperteilelements 5, insbesondere des Tellerelements. Sie ist derart als Ventilsitz ausgebildet, dass bei einer Anlage des zweiten Ventilkörperteilelements 5 der Hohlraum 26 von dem zweiten Hohlraum 27 dicht abgetrennt ist. Auf diese Weise wird verhindert, dass bei einer Anlage des zweiten Ventilkörperteilelements 5 an der zweiten Eintrittsöffnung 23 gasförmiges Fluid wie Abgas und/oder Ladeluft in den ersten Hohlraum 26 und durch die erste Austrittsöffnung 24 und/oder die zweite Austrittsöffnung 25 strömen kann. Der erste Hohlraum 26 ist im Bereich des ersten Gehäuseelements 20 mit dem geringeren Zylinderdurchmesser angeordnet. An der Zylinderwand des Zylinders mit dem geringeren Durchmesser im Vergleich zu dem Zylinderabschnitt, an dem die ersten Eintrittsöffnungen 22 angeordnet sind, ist zumindest eine erste Austrittsöffnung 24 und zumindest eine erste zweite Austrittsöffnung 25 eingebracht. Im dargestellten Ausführungsbeispiel ist die erste Austrittsöffnung 24 schlitzförmig. Die zweite Austrittsöffnung 25 ist ebenso schlitzförmig. Im dargestellten Ausführungsbeispiel ist die nicht näher bezeichnete Schlitzhöhe der ersten Austrittsöffnung 24 größer als die Schlitzhöhe der zweiten Austrittsöffnung 25. In einem anderen nicht dargestellten Ausführungsbeispiel weist die erste Austrittsöffnung 24 und die zweite Austrittsöffnung 25 im Wesentlichen die gleiche Schlitzhöhe auf. In einem anderen nicht dargestellten Ausführungsbeispiel ist die Schlitzhöhe der ersten Austrittsöffnung 24 geringer als die Schlitzöffnung der zweiten Austrittsöffnung 25.

Im dargestellten Ausführungsbeispiel sind in der nicht näher bezeichneten Zylinderwand zwei erste schlitzförmige Austrittsöffnungen angeordnet. Die ersten schlitzförmigen Austrittsöffnungen 24 sind im Wesentlichen gegenüberliegend voneinander angeordnet und durch zwei Trennstege voneinander getrennt. In einem anderen nicht dargestellten Ausführungsbeispiel kann nur eine Austrittsöffnung 24 vorgesehen sein oder können mehr als zwei erste Austrittsöffnungen 24 vorgesehen sein.

Im dargestellten Ausführungsbeispiel sind zwei zweite Austrittsöffnungen 25 gegenüberliegend voneinander angeordnet und durch zwei nicht näher bezeichnete Trennstege voneinander getrennt. In einem anderen nicht näher dargestellten Ausführungsbeispiel kann nur eine zweite Austrittsöffnung 25 in dem zweiten Ventilgehäuse oder können mehr als zwei zweite Austrittsöffnungen 25 in dem Ventilgehäuse 2 eingebracht sein.

Die zweite Eintrittsöffnung 23 weist einen Durchmesser D2 auf. Der erste Hohlraum 26 weist zumindest einen Zylinderabschnitt, insbesondere eine Anzahl von Zylinderabschnitten auf mit einem Durchmesser D1. Der Durchmesser D1 entspricht im Wesentlichen dem Außendurchmesser des Ventilkörpers 3. Die besagten Zylinderabschnitte mit dem Durchmesser D1 dienen als Führungsfläche für den Ventilkörper 3. Der Durchmesser D1 ist größer als der Durchmesser D2. Insbesondere ist ein Durchmesserverhältnis des ersten Durchmessers D1 zu dem zweiten Durchmesser D2 3:1, insbesondere 2:1, insbesondere 1,5:1. Dadurch, dass der Durchmesser der Bohrung des Hohlraums 26 größer als der Öffnungsdurchmesser D2 des zweiten Ventilkörperteilelements ist, entsteht ein geringer Druckverlust aufgrund der langen umlaufenden Austrittsöffnungen 24 und 25 zur Beströmung des Wärmetauschers, insbesondere Abgas- und/oder Ladeluftkühler bzw. des Bypasses. Auch bei geringer Spaltbreite steht eine ausreichende Querschnittsfläche auf diese Weise zur Verfügung. Es entstehen nur geringe Druckverluste, da ein großer Durchtrittsquerschnitt bei geringem Hub des Ventilkörpers 2 zur Verfügung steht. Die ersten Austrittsöffnungen 24 und die zweiten Austrittsöffnungen 25 sind derart ausgebildet, dass mit dem Ventilhub nacheinander die beiden Austrittsöffnungen 24 und 25 abgedeckt und/oder freigegeben und/oder nur eine Austrittsöffnung abgedeckt oder freigegeben wird.

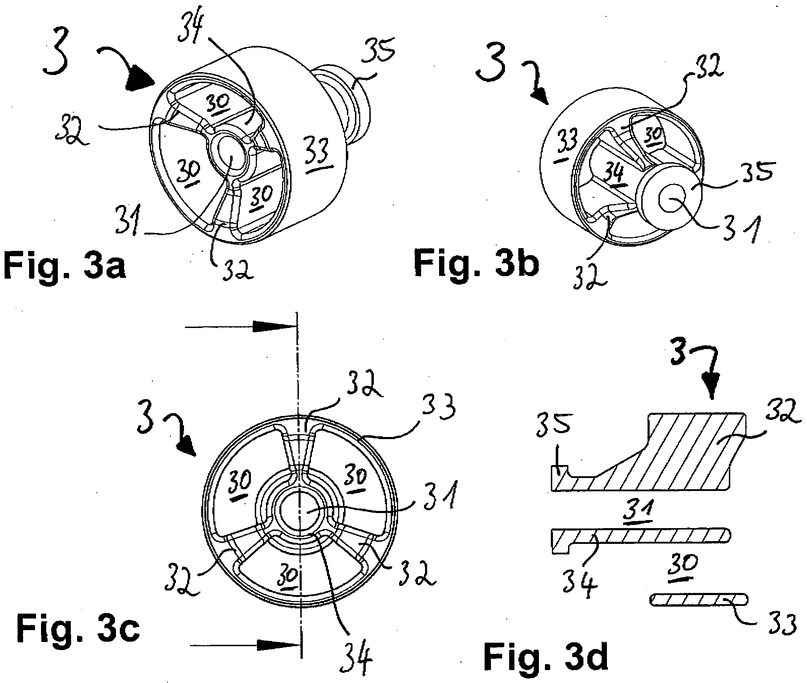

**Figur 3a** zeigt eine erste isometrische Darstellung des ersten Ventilkörperteilelements 4.

**Figur 3b** zeigt eine zweite isometrische Darstellung des ersten Ventilkörperteilelements 4.

**Figur 3c** zeigt eine Vorderansicht des ersten Ventilkörperteilelements 4.

**Figur 3d** zeigt eine Schnittdarstellung des ersten Ventilkörperteilelements 4. Gleiche Merkmale sind mit den gleichen Bezugszeichen versehen wie in den vorherigen Figuren.

In den Figuren 3a, 3b, 3c und 3d ist der Ventilkörper 3 ohne das zweite Ventilkörperteilelement dargestellt. Der Ventilkörper 3 ist aus einem metallischen Material wie beispielsweise Aluminium oder Stahl, wie beispielsweise Edelstahl, ausgebildet. Ferner kann der Ventilkörper 3 aus einem anderen Metall ausgebildet sein. Der Ventilkörper 3 kann in einem anderen Ausführungsbeispiel aus einem keramischen Werkstoff ausgebildet sein. In einem anderen Ausführungsbeispiel ist der Ventilkörper 3 aus einem Faserverbundwerkstoff oder aus einem hochtemperaturbeständigen Kunststoff ausgebildet.

Der Ventilkörper 3 weist einen ersten Ventilkörperzylinder 33 und einen zweiten Ventilkörperzylinder 34 auf. Der erste Ventilkörperzylinder 33 ist insbesondere als Zylinderringsegment ausgebildet. Ebenso ist im dargestellten Ausführungsbeispiel der zweite Ventilkörperzylinder 34 als Zylinderringsegment ausgebildet. Der zweite Ventilkörperzylinder 34 ist insbesondere koaxial in dem ersten Ventilkörperzylinder 33 angeordnet. Im dargestellten Ausführungsbeispiel erstrecken sich drei Stege 32 von dem zweiten Ventilkörperzylinder 34 zum ersten Ventilkörperzylinder 33. Auf diese Weise sind der erste Ventilkörperzylinder 33 und der zweite Ventilkörperzylinder 34 miteinander verbunden. Im dargestellten Ausführungsbeispiel sind der erste Ventilkörperzylinder 33, der zweite Ventilkörperzylinder 34 und die drei Stege 32 einteilig ausgebildet. An einem Ende des zweiten Ventilkörperzylinders 34 ist ein Bund 35 angeordnet. Der Bund 35 ist im Wesentlichen als zylinderförmiges Scheibenelement ausgebildet, wobei ein nicht näher bezeichneter Durchmesser des Bunds 35 größer ist als der größte Durchmesser des zweiten Ventilkörperzylinders 34. In einem anderen Ausführungsbeispiel können der zweite Ventilkörperzylinder 34 und der Bund 35 aber auch im Wesentlichen denselben Durchmesser aufweisen. Der Bund 35 dient insbesondere der Aufnahme des zweiten Ventilkörperteilelements 5, insbesondere des Tellerelements. Der erste Ventilkörperzylinder 33 ist kürzer als der zweite Ventilkörperzylinder 34. Insbesondere ist der erste Ventilkörperzylinder 33 in einer axialen Richtung der Zylinderachse versetzt bezüglich des zweiten Ventilkörperzylinders 34 angeordnet. Die drei Stege 32 sind derart ausgebildet, dass sie in axialer Richtung allmählich einen krümmungsgünstigen Übergang von dem ersten Ventilkörperzylinder 33 zu dem zweiten Ventilkörperzylinder 34 bilden. Im dargestellten Ausführungsbeispiel sind die drei Stege 32 jeweils um 120° versetzt zueinander angeordnet. In einem anderen Ausführungsbeispiel können benachbarte Stege 32 in einem Winkel von 10° bis 180°, insbesondere 20° bis 170° zueinander angeordnet sein. In einem anderen nicht dargestellten Ausführungsbeispiel weist der Ventilkörper 3 lediglich einen Steg 32 oder zwei Stege 32, die insbesondere gegenüberliegend voneinander angeordnet sind, oder mehr als drei Stege auf.

Der zweite Ventilkörperzylinder 34 weist eine Ventilkörperöffnung 31, insbesondere zur bereichsweisen Aufnahme der Stange 6 auf. Ferner ist zwischen den Stegen 32 zumindest eine Durchgangsöffnung 30, im dargestellten Ausführungsbeispiel drei Durchgangsöffnungen 30, ausgebildet. Insbesondere ist ein Durchgangskanal 30 zylindersegmentartig ausgebildet. Durch den Durchgangskanal bzw. die Durchgangsöffnung 30 kann gasförmiges Fluid, wie beispielsweise Abgas und/oder Ladeluft strömen. Der Durchgangskanal bzw. die Durchgangsöffnung 30 wird von einem nicht näher bezeichneten Wandabschnitt des zweiten Ventilkörpers 34, einem nicht näher bezeichneten Wandabschnitt des ersten Ventilkörperzylinders 33 und den beiden nicht näher bezeichneten Wandabschnitten von zwei Stegen 32 begrenzt.

Das erste Ventilkörperteilelement und das zweite Ventilkörperteilelement können beispielsweise einteilig ausgebildet sein. Das zweite Ventilkörperteilelement 5 ist derart ausgebildet, dass Leckagen im geschlossenen Zustand minimal sind bzw. minimiert werden. Durch axialen Hub in Richtung der Stange 6. bzw. der Zylinderachsen legt sich das tellerartig ausgebildete zweite Ventilkörperteilelement 5 im Wesentlichen umlaufend dicht an den Lagersitz, insbesondere die zweite Eintrittsöffnung 23 an.

Die Abdichtung des ersten Ventilkörperzylinders 33 des Ventilkörpers 3 bezüglich der zwei Austrittsöffnungen 24 und 25 erfordert geringere Anforderung bezüglich der Dichtheit. Zwischen dem Außendurchmesser des ersten Ventilkörperzylinders 33 und dem Durchmesser D1 kann eine gewisse Differenz bestehen. Diese Differenz sorgt dafür, dass bei Verformungen und Verzügen des Ventilgehäuses oder des Ventilkörpers 3 es nicht zum Verklemmen des Ventilkörpers in dem Ventilgehäuse kommt. Deshalb sind geringe Leckagen in diesen Bereichen zu vernachlässigen, da geringe Leckagen von zu kühlendem Fluid wie beispielsweise Abgas und/oder Ladeluft nur zu einer unwesentlichen Abkühlung des Bypasses bzw. nur zu einer geringen Erwärmung des gekühltes Abgases und/oder der Ladeluft führen.

Das zweite Ventilkörperteilelement 5 und die Stange 6 können beispielsweise mittels Schweißen, insbesondere Laserschweißen, in einer Aufspannung erfolgen. Darüber hinaus können diese beiden Elemente auch auf andere Weise stoffschlüssig und/oder formschlüssig gefügt werden. In einer anderen Ausführung sind die beiden Teile einteilig ausgebildet.

Die Stange 6, das erste Ventilkörperteilelement 4 und das zweite Ventilkörperteilelement 5 können mechanisch gefügt sein, beispielsweise durch Aufpressen des tellerförmigen zweiten Ventilkörperteilelements 5 und des ersten Ventilkörperteilelements 4 auf die Stange 6, insbesondere die Welle. Beispielsweise kann das erste Ventilkörperteilelement 4 durch einen Schweißhefter oder durch Verstemmen zusätzlich gesichert sein. Das zweite Ventilkörperteilelement 5, das insbesondere tellerartig ausgebildet ist, und das erste Ventilkörperteilelement 4 können beispielsweise in zwei Arbeitsgängen nacheinander mit der Welle 6, insbesondere der Stange, verbunden, insbesondere gefügt werden wie beispielsweise mittels zweier Schweißprozesse, mittels Aufpressprozessen oder durch Schweißen und anschließendes Aufpressen. Auch die weiteren Elemente des Ventilkörpers 3, wie beispielsweise der erste Ventilkörperzylinder 33 und der zweite Ventilkörperzylinder 34 und/oder der Bund 35 können durch Fügeprozesse wie Löten, Schweißen, Kleben oder durch mechanische Fügeprozesse wie beispielsweise Aufpressen miteinander verbunden werden. Darüber hinaus können die entsprechenden Teile einteilig beispielsweise mittels Gießen und anschließender spanender Bearbeitung wie beispielsweise Drehen, Bohren, Schleifen usw. hergestellt werden.

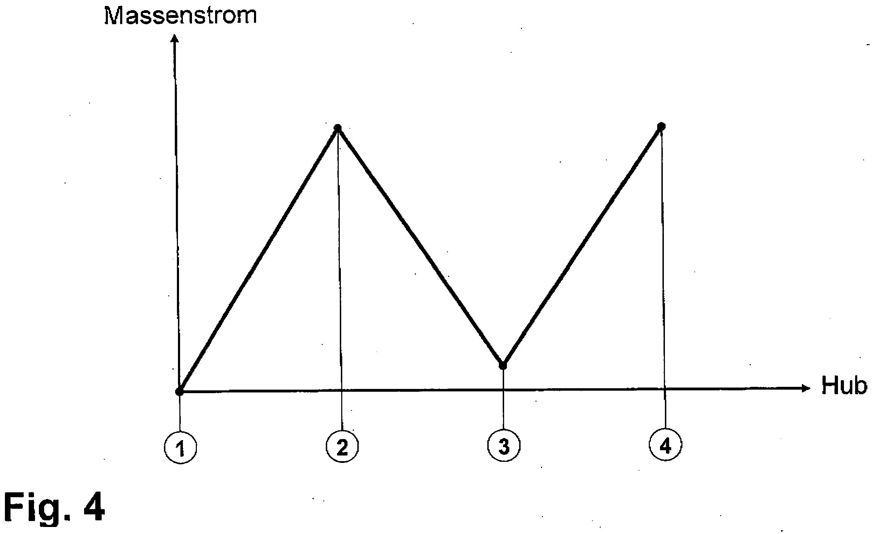

**Figur 4** zeigt ein Regeldiagramm der Ventileinrichtung 1, wobei der Massenstrom des gasförmigen Fluids, insbesondere des Abgases und/oder der Ladeluft, über dem Hub des Ventilkörpers 3 aufgetragen ist. Die Punkte 1, 2, 3 und 4 stellen bestimmte Stellungen des Ventils dar, die in den nachfolgenden Figuren ausführlicher beschrieben werden und dargestellt sind.

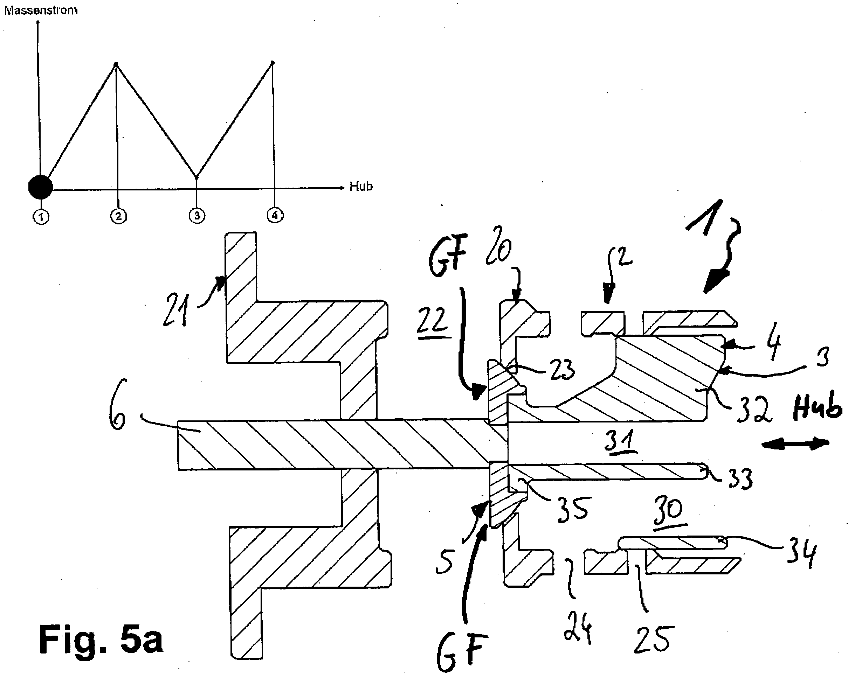

**Figur 5a** zeigt eine erste Ventilstellung des Ventilkörpers 3 des Ventils 1 in dem Ventilgehäuse 3. Gleiche Merkmale sind mit den gleichen Bezugszeichen versehen wie in den vorherigen Figuren.

Das zweite Ventilkörperteilelement 5 liegt bei der Eintrittsöffnung 23 im Wesentlichen derart bündig an, dass über die ersten Eintrittsöffnungen 22 einströmendes gasförmiges Fluid, insbesondere Abgas und/oder Ladeluft, nicht durch die zweite Eintrittsöffnung 23 strömen kann.

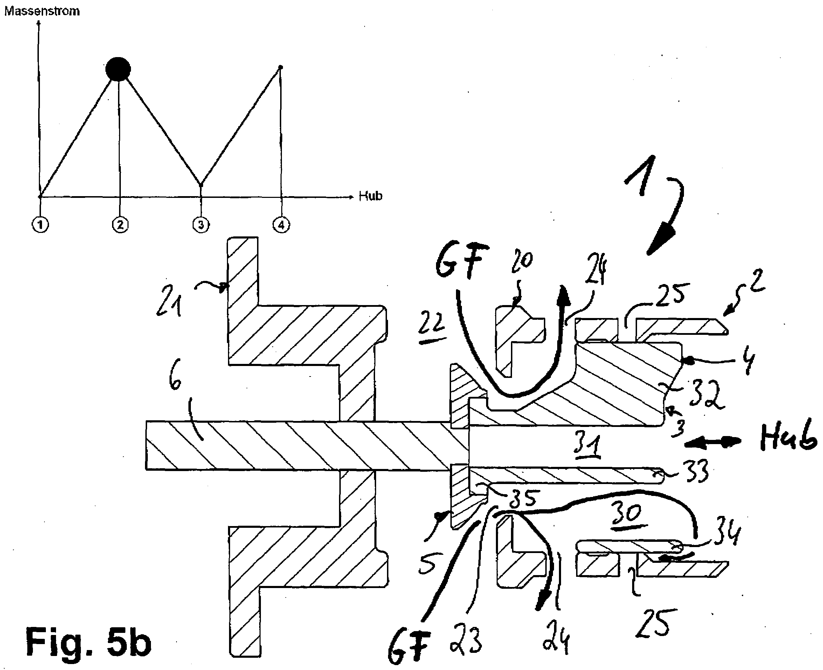

**Figur 5b** zeigt eine zweite Stellung des Ventils 1 sowie des Ventilkörpers 3 in dem Ventilgehäuse 2. Gleiche Merkmale sind mit den gleichen Bezugszeichen versehen wie in den vorherigen Figuren.

Das zweite Ventilkörperteilelement 5 gibt die zweite Eintrittsöffnung 23 frei, derart, dass der maximale Massenstrom des gasförmigen Fluids durch die zweite Eintrittsöffnung 23 durch die maximal freigegebene erste Austrittsöffnung, insbesondere die ersten Austrittsöffnungen 24, in den Wärmetauscher, insbesondere den Abgaskühler und/oder den Ladeluftkühler strömen kann. Die zweite Austrittsöffnung 25, insbesondere die zweiten Austrittsöffnungen 25, sind verschlossen. Die zweiten Austrittsöffnungen 25 sind aber nicht vollkommen dicht verschlossen. Zumindest eine sehr geringe Leckagemenge kann dennoch über die zumindest eine zweite Austrittsöffnung 25 in den Bypass strömen.

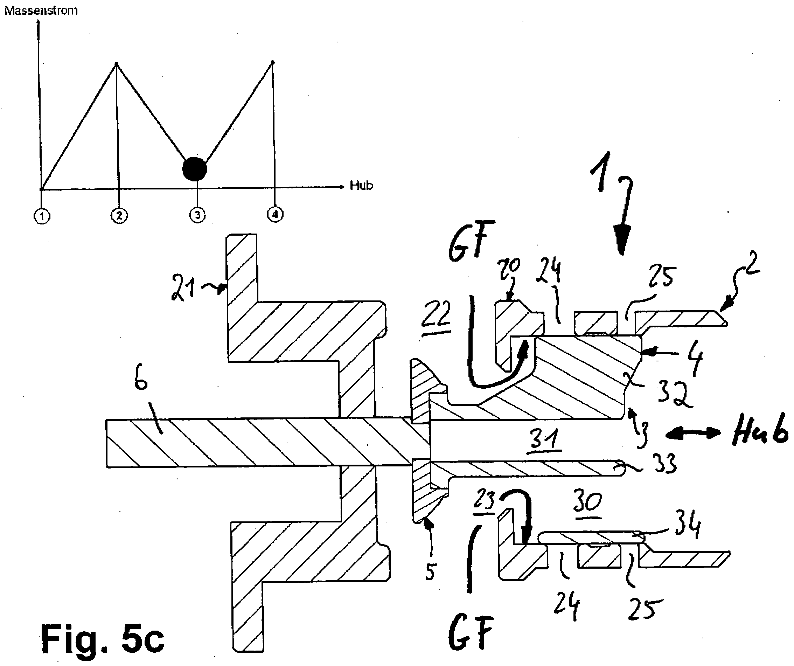

**Figur 5c** zeigt eine dritte Stellung der Ventilvorrichtung 1, die von dem Ventilkörper 3 in dem Ventilgehäuse 2 eingenommen wird. Dabei ist die zweite Eintrittsöffnung 23 freigegeben, so dass gasförmiges Fluid in den Hohlraum 26 des Ventilgehäuses 2 einströmen kann. Die zweite Austrittsöffnung 24, insbesondere die zweiten Austrittsöffnungen 24, und die zumindest eine erste zweite Austrittsöffnung 25, insbesondere die zweiten Austrittsöffnungen 25, sind jedoch vom ersten Ventilkörperteilelement 4 verschlossen. Sie sind jedoch nicht vollkommen dicht verschlossen, so dass ein sehr geringer Leckagemassenstrom in den Wärmetauscher und/oder in den Bypasskanal strömen kann. Gleiche Merkmale sind mit den gleichen Bezugszeichen versehen wie in den vorherigen Figuren.

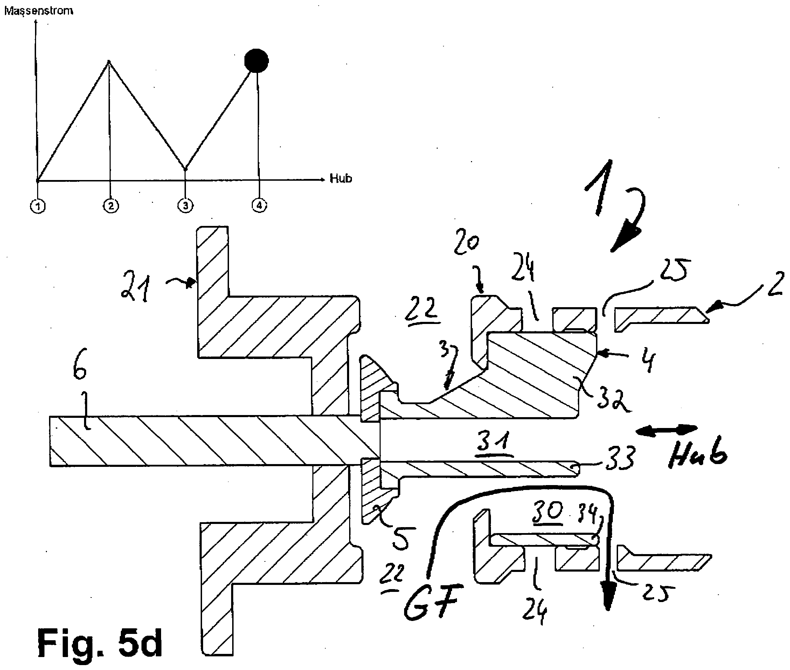

**Figur 5d** zeigt eine vierte Stellung der Ventilvorrichtung 1, die der Ventilkörper 3 in dem Ventilgehäuse 2 einnimmt. Gleiche Merkmale sind mit den gleichen Bezugszeichen versehen wie in den vorherigen Figuren.

Die zweite Eintrittsöffnung 23 ist freigegeben, so dass gasförmiges Fluid, insbesondere Abgas und/oder Ladeluft durch den zumindest einen Durchgangskanal, insbesondere die drei Durchgangskanäle bzw. Durchgangsöffnungen 30 strömen und über die zumindest eine zweite Austrittsöffnung 25, insbesondere die zweiten Austrittsöffnungen 25, in den Bypass strömen kann.

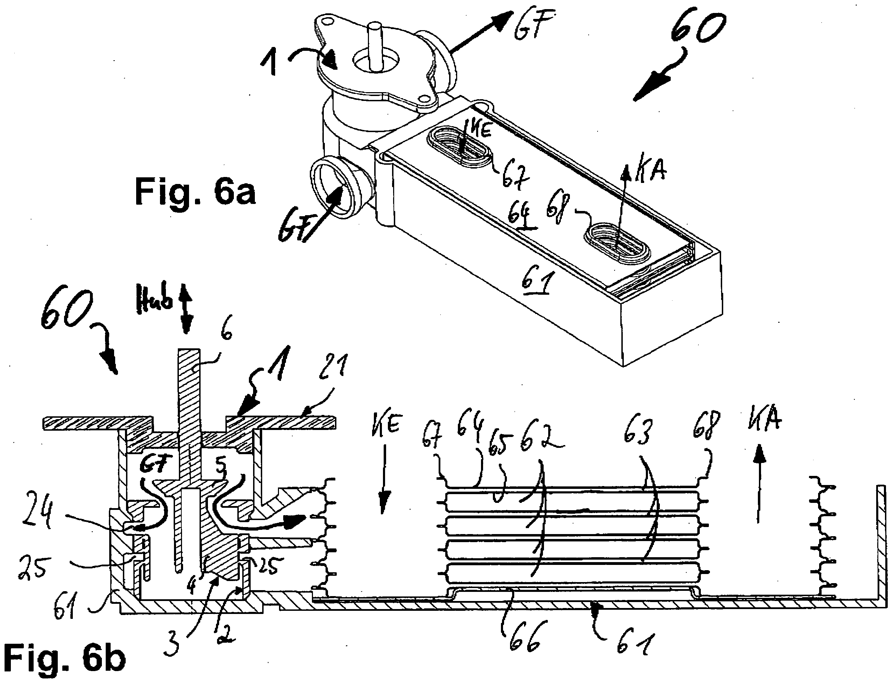

**Figur 6a** zeigt eine erste isometrische Darstellung eines Wärmetauschers 60 mit der Ventilvorrichtung 1.

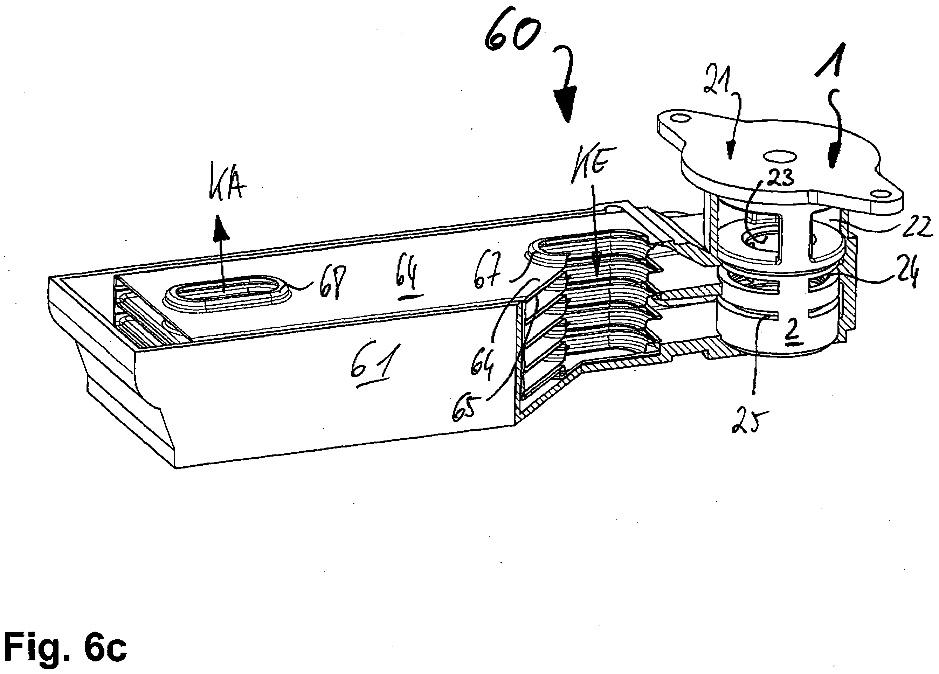

**Figur 6b** zeigt eine Schnittdarstellung des Wärmetauschers 60 mit der Ventilvorrichtung 1 und **Figur 6c** zeigt eine zweite isometrische Darstellung des Wärmetauschers 60 mit der Ventilvorrichtung 1. Gleiche Merkmale sind mit den gleichen Bezugszeichen versehen wie in den vorherigen Figuren.

Der Wärmetauscher 60 ist ein Abgaskühler. In einem anderen Ausführungsbeispiel ist der Wärmetauscher 60 ein Ladeluftkühler. Ferner kann in einem anderen nicht dargestellten Ausführungsbeispiel der Wärmetauscher 60 ein Ölkühler, ein Kühlmittelkühler oder ein Kondensator oder ein Verdampfer für eine Klimaanlage sein.

Der Wärmetauscher 60 weist ein Wärmetauschergehäuse 61 auf. Das Wärmetauschergehäuse 61 dient zur Aufnahme von ersten Strömungskanälen 62 und zweiten Strömungskanälen 63 sowie zur Aufnahme von ersten Scheiben 64 und zweiten Scheiben 65. Die ersten Scheiben 64 und die zweiten Scheiben 65 sind abwechselnd übereinander derart angeordnet, dass eine erste Scheibe 64 über einer zweiten Scheibe 65 angeordnet ist. Die ersten Scheiben 64 weisen jeweils einen ersten Napf 67 und einen zweiten Napf 68 auf. Ebenso weisen die zweiten Scheiben 65 einen ersten entsprechenden Napf 67 und einen zweiten Napf 68 auf. Die ersten und die zweiten Scheiben sind übereinander gestapelt. Zwischen jeweils einer ersten Scheibe 64 und einer zweiten Scheibe 65 ist auf der einen Seite ein erster Strömungskanal für gasförmiges Fluid wie beispielsweise Abgas und/oder Ladeluft und auf der anderen Seite Kühlmittel wie beispielsweise Kühlflüssigkeit wie Wasser oder wasserhaltige Kühlflüssigkeit oder Luft. Die ersten Näpfe 67 und die zweiten Näpfe 68 weisen Öffnungen auf zum Durchtritt des Kühlmittels. Über den Kühlmitteleintritt KE strömt Kühlmittel in die ersten Näpfe 67 ein. Über den Kühlmittelaustritt KA strömt Kühlmittel aus den zweiten Näpfen 68 aus.

Das Wärmetauschergehäuse 61 dient zur Aufnahme der Ventilvorrichtung 1. Das Ventilgehäuse 2 ist in einem Ausführungsbeispiel kartuschenförmig in das Wärmetauschergehäuse 61 einschiebbar bzw. eingeschoben. In einer anderen Ausführungsform sind das zweite Ventilgehäuse und das Wärmetauschergehäuse 61 einteilig ausgebildet.

An dem Scheibenstapel aus ersten Scheiben 64 und zweiten Scheiben 65 schließt sich eine Bodenscheibe 66 an.

Das Ventilgehäuse 2 mit der zweiten Eintrittsöffnung 23 ist insbesondere Bestandteil eines Käfigs, der Teil der Kartusche ist. Der Käfig kann derart verlängert sein, dass der Ventilkörper 3 einen Teil oder einen vollständigen Hub innerhalb des Käfigs durchläuft, insbesondere des Gehäuses 2 durchläuft. Die schlitzförmigen ersten Austrittsöffnungen 24 und die zweiten Austrittsöffnungen 25 bilden Durchtritte in die Austrittskanäle und werden vom ersten Ventilkörperzylinder 33 freigegeben bzw. verdeckt. Insbesondere ist in besonders vorteilhafter Weise die Toleranzkette Ventilkörper 3 zur Dichtfläche in dem Gehäuse 2 kürzer, da die Lagerung für die Welle, insbesondere die Stange 6, und die Austrittsöffnungen 24, 25 jeweils Teil des Gehäuses 2 sind. Somit sind engere Spalten mit geringerer Leckage am Ventilkörper 3 darstellbar. In besonders vorteilhafter Weise ist der Ventilkörper 3 vor und während der Montage durch das Gehäuse 2 gegen Beschädigungen geschützt. Die Abdichtung vom Wärmetauschergehäuse 61 zum Ventilgehäuse 2, insbesondere dem Käfig, erfolgt im Wesentlichen umlaufend zwischen dem Abgaseintrittskanal und dem benachbarten Abgasaustrittskanal. Auf diese Weise ist die Toleranzkette so ausgelegt, dass eine Abdichtung durch einen Formschluss erfolgt, beispielsweise eine konische Ausführung der Anlagestelle. Im Bereich des ersten Ventilkörperzylinders 33 kann die Abdichtung vom Ventilgehäuse 2, insbesondere dem Käfig, zum Wärmetauschergehäuse 61 mit einer Spielpassung erfolgen, da dort kleine Leckagen zulässig sind. In einer weiteren Ausführung kann auch eine Stahlbuchse in das Ventilgehäuse 2 eingegossen sein, wobei das Ventilgehäuse selbst aus Aluminium ist. Dies dient einer Lebensdauersteigerung.

Ferner kann das Ventilgehäuse 2 derart ausgebildet sein, dass noch andere Funktionselemente, wie beispielsweise der Bypass, eine Halterung für den Ventilantrieb, insbesondere den Motor bzw. einen anderen Aktuator in dem Ventilgehäuse 2 angeordnet sind. Ferner kann das Wärmetauschergehäuse 61 derart ausgebildet sein, dass noch andere Wärmetauscher wie beispielsweise ein Öl- oder Ladeluftkühler aufgenommen werden. Ferner kann das Wärmetauschergehäuse 61 Halterungen für weitere Anbauteile oder integrierte Kanäle zur Führung von Kühlmittel oder andere Befestigungselemente zur Befestigung von Sensoren aufweisen.

Der Wärmetauscher 60 ist insbesondere ein Abgaskühler im U-Flow. Hierbei strömt Abgas auf derselben Seite in den Wärmetauscher ein, an dem es den Wärmetauscher wieder verlässt. Darüber hinaus kann der Wärmetauscher, insbesondere der Abgaskühler, auch als I-Flow-Wärmetauscher ausgebildet sein. Dabei strömt das Abgas an der einen Seite in den Wärmetauscher ein, durchströmt diesen und strömt an der anderen gegenüberliegenden Seite wieder aus dem Wärmetauscher heraus. Dabei kann das Gehäuse beispielsweise entlang dem Bypasskanal gekühlt werden.

Ferner kann das Wärmetauschergehäuse 61 als sogenanntes Kombigehäuse ausgebildet sein, so dass sowohl der Wärmetauscher 60, insbesondere der Abgaskühler, als auch das Ventil 1 in dem Wärmetauschergehäuse 61 angeordnet und durch dieses aufgenommen werden.

Das Wärmetauschergehäuse 61 und/oder das Ventilgehäuse sind als Gussgehäuse wie beispielsweise aus Aluminiumdruckguss ausgebildet. Darüber hinaus kann das Wärmetauschergehäuse 61 auch aus Stahlguss ausgebildet sein. Darüber hinaus kann das Wärmetauschergehäuse auch aus Kunststoff oder aus einem Faserverbundwerkstoff ausgebildet sein.

Bei der Ausbildung des Wärmetauschers 60, insbesondere des Abgaskühlers als U-Flow-Wärmetauscher wird das Gehäuse insbesondere nur in dem Bereich gekühlt, in dem das Ventil 1 angeordnet ist. Dies erfolgt beispielsweise durch Kanäle in dem Gehäuse 2, 61. Die Kanäle werden beispielsweise mittels Bohrungen in das Gehäuse eingebracht. Insbesondere können die Kanäle oder Teile der Kanäle bereits in einem vorgelagerten Arbeitsschritt gegossen sein. Die Öffnungen nach außen können dann durch Stopfen, wie beispielsweise Kugeln oder Ähnliches, nach außen verschlossen werden. Bei der Ausbildung des Wärmetauschers 60 als I-Flow-Wärmetauscher, insbesondere I-Flow-Abgaskühler, kann das Wärmetauschergehäuse 61 und/oder das Ventilgehäuse 2 ungekühlt oder in einer anderen Ausführungsform, insbesondere im Ventilbereich gekühlt sein. Bei einer derartigen Ausführungsform ist das Wärmetauschergehäuse 61 und/oder das Gehäuse 2 vorzugsweise aus Stahlguss ausgebildet. In einer anderen Ausführungsform eines I-Flow-Wärmetauschers, insbesondere eines Abgaskühlers, ist das Wärmetauschergehäuse 61 und/oder das Ventilgehäuse 2 im Abschnitt, in dem der Kühler angeordnet ist und insbesondere der Bypass, gekühlt.

### Bezugszeichenliste

- GF: Strömung des gasförmigen Fluids
- 1: Ventilvorrichtung
- 2: Ventilgehäuse
- 3: Ventilkörper
- 4: Erstes Ventilkörperteilelement
- 5: Zweites Ventilkörperteilelement
- 6: Welle, Stange
- 20: Erstes Gehäuseelement.
- 21: Zweites Gehäuseelement
- 22: Erste Eintrittsöffnung
- 23: Zweite Eintrittsöffnung
- 24: Erste Austrittsöffnung
- 25: Zweite Austrittsöffnung
- 26: Erster Hohlraum
- 27: Zweiter Hohlraum
- 30: Durchgangskanal, Durchgangsöffnung
- 31: Ventilkörperöffnung
- 32: Steg
- 33: erster Ventilkörperzylinder
- 34: zweiter Ventilkörperzylinder
- 35: Bund
- 60: Wärmetauscher
- 61: Wärmetauschergehäuse
- 62: Erster Strömungskanal
- 63: Zweiter Strömungskanal
- 64: Erste Scheibe
- 65: Zweite Scheibe
- 66: Bodenscheiben
- 67: Erster Napf
- 68: Zweiter Napf

## Patentansprüche

1. Ventilvorrichtung zur Regelung eines rückgeführten gasförmigen Fluids und/oder zur Wärmetauscher-/Bypassregelung für einen Wärmetauscher eines Verbrennungsmotors eines Kraftfahrzeugs aufweisend
- zumindest einen Ventilkörper (3)
- zumindest ein Ventilgehäuse (2) zur zumindest abschnittsweisen Aufnahme des Ventilkörpers (3), wobei das Ventilgehäuse (2) zumindest eine Eintrittsöffnung (22, 23) zum Einströmen von einem gasförmigen Fluid, zumindest eine erste Austrittsöffnung (24) zur Beströmung eines Wärmetauschers (60) mit dem gasförmigen Fluid und zumindest eine zweite Austrittsöffnung (25) zum Bypassen des gasförmigen Fluids um den Wärmetauscher (60) aufweist,
**dadurch gekennzeichnet, dass**
der Ventilkörper (3) zumindest ein erstes hohlkörperartiges Ventilkörperteilelement (4) zur Regelung der Durchflussmenge zumindest einer Austrittsöffnung (24, 25) und zumindest ein zweites zumindest abschnittsweise konisch, insbesondere tellerartig, ausgebildetes Ventilkörperteilelement (5) zur Regelung der Durchflussmenge der Eintrittsöffnung (22, 23) aufweist, wobei zumindest eine Austrittsöffnung (24, 25), insbesondere die zumindest eine erste Austrittsöffnung (24) und/oder die zumindest eine zweite Austrittsöffnung (25), und/oder die zumindest eine Eintrittsöffnung (22, 23) schlitzförmig ausgebildet sind.

2. Ventilvorrichtung nach Anspruch 1, **dadurch gekennzeichnet, dass** das erste Ventilkörperteilelement (4) die Durchflussmenge der ersten Austrittsöffnung (24) und/oder der zweiten Austrittsöffnung (25) regelt.

3. Ventilvorrichtung nach einem der vorhergehenden Ansprüche, **dadurch gekennzeichnet, dass** das erste Ventilkörperteilelement (4) und das zweite Ventilkörperteilelement (5) einteilig ausgebildet sind.

4. Ventilvorrichtung nach einem der vorhergehenden Ansprüche, **dadurch gekennzeichnet, dass** das erste Ventilkörperteilelement (4) zumindest bereichsweise zylinderförmig ausgebildet ist und/oder zumindest eine erste Querschnittsfläche mit einem ersten Durchmesser (D1) aufweist.

5. Ventilvorrichtung nach einem der vorhergehenden Ansprüche, **dadurch gekennzeichnet, dass** das zweite Ventilkörperteilelement (5) kegelstumpfartig, insbesondere tellerförmig ausgebildet ist.

6. Ventilvorrichtung nach einem der vorhergehenden Ansprüche, **dadurch gekennzeichnet, dass** das zweite Ventilkörperteilelement (5) zumindest eine zweite Querschnittsfläche mit einem zweiten Durchmesser (D2) aufweist.

7. Ventilvorrichtung nach Anspruch 6, **dadurch gekennzeichnet, dass** der zumindest eine erste Durchmesser (D1) größer als der zumindest eine zweite Durchmesser (D2) ist.

8. Ventilvorrichtung nach Anspruch 6 oder 7, **dadurch gekennzeichnet, dass** ein Durchmesserverhältnis des ersten Durchmessers (D1) zu dem zweiten Durchmesser (D2) 3:1, insbesondere 2:1, insbesondere 1,5:1 ist.

9. Ventilvorrichtung nach einem der vorhergehenden Ansprüche, **dadurch gekennzeichnet, dass** das erste Ventilkörperteilelement (4) zumindest einen Durchgangskanal (30) zur Durchströmung mit dem gasförmigen Fluid aufweist.

10. Ventilvorrichtung nach Anspruch 9, **dadurch gekennzeichnet, dass** der zumindest eine Durchgangskanal (30) zumindest abschnittsweise zylindersegmentartig ausgebildet ist.

11. Wärmetauscher, insbesondere Abgaskühler und/oder Ladeluftkühler, aufweisend
- erste Strömungskanäle (62) zur Führung des gasförmigen Fluids und
- zweite Strömungskanäle (63) zur Führung eines zweiten Fluids zur Kühlung des gasförmigen Fluids,
- zumindest ein Wärmetauschergehäuse (61) zur Aufnahme der ersten Strömungskanäle (62) und der zweiten Strömungskanäle (63)
**dadurch gekennzeichnet, dass**
zumindest eine Ventilvorrichtung (1) nach einem der vorhergehenden Ansprüche in dem Wärmetauscher (60) angeordnet ist.

12. Wärmetauscher nach Anspruch 11, **dadurch gekennzeichnet, dass** die Ventilvorrichtung (1) kartuschenartig in den Wärmetauscher (60) einbaubar ist.

13. Wärmetauscher nach Anspruch 11 oder 12, **dadurch gekennzeichnet, dass** das Ventilgehäuse (2) und das Wärmetauschergehäuse (61) zumindest abschnittsweise mittels zumindest einer Dichtung gegeneinander abgedichtet sind.

14. Wärmetauscher nach einem der Ansprüche 11 bis 13, **dadurch gekennzeichnet, dass** das Ventilgehäuse (2) und das Wärmetauschergehäuse (61) einteilig ausgebildet sind.

## Claims

1. A valve device for controlling a recycled gaseous fluid and/or for the heat exchanger/bypass control for a heat exchanger of an internal combustion engine of a motor vehicle, having
- at least one valve body (3)
- at least one valve housing (2) for receiving, at least in sections, the valve body (3), wherein the valve housing (2) has at least one inlet opening (22, 23) for the inflow of a gaseous fluid, at least one first outlet opening (24) for flowing the gaseous fluid through a heat exchanger (60), and at least one second outlet opening (25) for bypassing the gaseous fluid around the heat exchanger (60),
**characterised in that**
the valve body (3) has at least one first hollow body-like valve body subcomponent (4) for controlling the flow rate of at least one outlet opening (24, 25) and at least one second valve body subcomponent (5) which is, at least in sections, formed conically, in particular plate-like, for controlling the flow rate of the inlet opening (22, 23), wherein at least one outlet opening (24, 25), in particular the at least one first outlet opening (24) and/or the at least one second outlet opening (25), and/or the at least one inlet opening (22, 23) are formed slot-like.

2. The valve device as claimed in claim 1, **characterised in that** the first valve body subcomponent (4) controls the flow rate of the first outlet opening (24) and/or the second outlet opening (25).

3. The valve device as claimed in one of the preceding claims, **characterised in that** the first valve body subcomponent (4) and the second valve body subcomponent (5) are formed integrally.

4. The valve device as claimed in one of the preceding claims, **characterised in that** the first valve body subcomponent (4) is, at least in sections, formed cylindrically and/or has at least one first cross-sectional area with a first diameter (D1).

5. The valve device as claimed in one of the preceding claims, **characterised in that** the second valve body subcomponent (5) is formed as a truncated cone, in particular plate-shaped.

6. The valve device as claimed in one of the preceding claims, **characterised in that** the second valve body subcomponent (5) has at least one second cross-sectional area with a second diameter (D2).

7. The valve device as claimed in claim 6, **characterised in that** the at least one first diameter (D1) is greater than the at least one second diameter (D2).

8. The valve device as claimed in claim 6 or 7, **characterised in that** a diameter ratio of the first diameter (D1) to the second diameter (D2) is 3:1, in particular 2:1, in particular 1.5:1.

9. The valve device as claimed in one of the preceding claims, **characterised in that** the first valve body subcomponent (4) has at least one passage channel (30) for the throughflow of the gaseous fluid.

10. The valve device as claimed in claim 9, **characterised in that** the at least one passage channel (30) is, at least in sections, formed as a cylinder segment.

11. A heat exchanger, in particular an exhaust gas cooler and/or charge air cooler, having
- first flow channels (62) for guiding the gaseous fluid and
- second flow channels (63) for guiding a second fluid in order to cool the gaseous fluid,
- at least one heat exchanger housing (61) for receiving the first flow channels (62) and the second flow channels (63)
**characterised in that**
at least one valve device (1) as claimed in one of the preceding claims is arranged in the heat exchanger (60).

12. The heat exchanger as claimed in claim 11, **characterised in that** the valve device (1) can be installed in the heat exchanger (60) like a cartridge.

13. The heat exchanger as claimed in claim 11 or 12, **characterised in that** the valve housing (2) and the heat exchanger housing (61) are, at least in sections, sealed against each other by at least one seal.

14. The heat exchanger as claimed in one of claims 11 to 13, **characterised in that** the valve housing (2) and the heat exchanger housing (61) are formed integrally.

## Revendications

1. Dispositif à soupape servant à la régulation d'un fluide gazeux recyclé et / ou servant à la régulation de dérivation / d'échangeur de chaleur pour un échangeur de chaleur d'un moteur à combustion interne d'un véhicule automobile, ledit dispositif à soupape présentant
- au moins un corps de soupape (3),
- au moins une cage de soupape (2) servant au logement au moins partiel du corps de soupape (3), où la cage de soupape (2) présente au moins une ouverture d'entrée (22, 23) servant à l'entrée d'un fluide gazeux, au moins une première ouverture de sortie (24) servant à faire circuler le fluide gazeux dans un échangeur de chaleur (60), et présente au moins une deuxième ouverture de sortie (25) servant à la dérivation du fluide gazeux autour de l'échangeur de chaleur (60),
**caractérisé en ce que**
le corps de soupape (3) présente au moins un premier élément partiel de corps de soupape (4), en forme de corps creux, servant à la régulation du débit de passage au moins d'une ouverture de sortie (24, 25) et présente au moins un deuxième élément partiel de corps de soupape (5) configuré au moins partiellement de façon conique, en particulier en forme de champignon, et servant à la régulation du débit de passage de l'ouverture d'entrée (22, 23), où au moins une ouverture de sortie (24, 25), en particulier la première ouverture de sortie (24) au moins au nombre de un et / ou la deuxième ouverture de sortie (25) au moins au nombre de un et / ou l'ouverture d'entrée (22, 23) au moins au nombre de un, sont configurées en forme de fente.

2. Dispositif à soupape selon la revendication 1, **caractérisé en ce que** le premier élément partiel de corps de soupape (4) régule le débit de passage de la première ouverture de sortie (24) et / ou de la deuxième ouverture de sortie (25).

3. Dispositif à soupape selon l'une des revendications précédentes, **caractérisé en ce que** le premier élément partiel de corps de soupape (4) et le second élément partiel de corps de soupape (5) sont configurés en formant une seule et même pièce.

4. Dispositif à soupape selon l'une quelconque des revendications précédentes, **caractérisé en ce que** le premier élément partiel de corps de soupape (4) est configuré au moins partiellement en forme de cylindre et / ou présente au moins une première surface de section ayant un premier diamètre (D1).

5. Dispositif à soupape selon l'une quelconque des revendications précédentes, **caractérisé en ce que** le second élément partiel de corps de soupape (5) est en forme de tronc de cône, en particulier en forme de champignon.

6. Dispositif à soupape selon l'une quelconque des revendications précédentes, **caractérisé en ce que** le second élément partiel de corps de soupape (5) présente au moins une deuxième surface de section ayant un deuxième diamètre (D2).

7. Dispositif à soupape selon la revendication 6, **caractérisé en ce que** le premier diamètre (D1) au moins au nombre de un est supérieur au deuxième diamètre (D2) au moins au nombre de un.

8. Dispositif à soupape selon la revendication 6 ou 7, **caractérisé en ce qu'**un rapport de diamètre du premier diamètre (D1) relativement au deuxième diamètre (D2) est de 3:1, en particulier de 2:1, en particulier de 1,5:1.

9. Dispositif à soupape selon l'une quelconque des revendications précédentes, **caractérisé en ce que** le premier élément partiel de corps de soupape (4) présente au moins un conduit de passage (30) servant à la circulation avec le fluide gazeux.

10. Dispositif à soupape selon la revendication 9, **caractérisé en ce que** le conduit de passage (30) au moins au nombre de un est configuré au moins partiellement en forme de segment de cylindre.

11. Echangeur de chaleur, en particulier refroidisseur de gaz d'échappement et / ou refroidisseur d'air de suralimentation, présentant
- des premiers conduits de circulation (62) servant au guidage du fluide gazeux, et
- des deuxièmes conduits de circulation (63) servant au guidage d'un deuxième fluide servant au refroidissement du fluide gazeux,
- au moins un carter d'échangeur de chaleur (61) servant au logement des premiers conduits de circulation (62) et des deuxièmes conduits de circulation (63),
**caractérisé**
**en ce qu'**au moins un dispositif à soupape (1) selon l'une quelconque des revendications précédentes est disposé dans l'échangeur de chaleur (60).

12. Echangeur de chaleur selon la revendication 11, **caractérisé en ce que** le dispositif à soupape (1) peut être monté, sous forme de cartouche, dans l'échangeur de chaleur (60).

13. Echangeur de chaleur selon la revendication 11 ou 12, **caractérisé en ce que** la cage de soupape (2) et le carter d'échangeur de chaleur (61) sont rendus étanches l'un par rapport à l'autre, au moins partiellement au moyen au moins d'un joint d'étanchéité.

14. Echangeur de chaleur selon l'une quelconque des revendications 11 à 13, **caractérisé en ce que** la cage de soupape (2) et le carter d'échangeur de chaleur (61) sont configurés en formant une seule et même pièce.
